# EUROPEAN PATENT APPLICATION

(11) **EP 2 214 052 A2**
(43) Date of publication of application: **04.08.2010**
(21) Application number: 10001067.7
(22) Date of filing: 02.02.2010
(51) Int. Cl.: G02F 1/133

(54) **Liquid crystal display apparatus**

(30) Priority: 03.02.2009 JP 2009022918
(71) Applicant: SANYO Electric Co., Ltd., Moriguchi-shi Osaka 570-8677 (JP)
(72) Inventor: Yoshida, Tomonori, Moriguchi-shi Osaka 570-8677 (JP); Kondo, Takahiro, Moriguchi-shi Osaka 570-8677 (JP); Sato, Hidenori, Moriguchi-shi Osaka 570-8677 (JP)
(74) Representative: Glawe, Delfs, Moll

(57) **Abstract**

The liquid crystal display apparatus comprises: a liquid crystal panel; a lightening device lightening the liquid crystal panel; a cooler cooling the liquid crystal panel; a first detector detecting a surrounding temperature of the liquid crystal panel; a second detector detecting a surrounding temperature of the cooler; a controller controlling the lightening device and the cooler based on output of the first and the second detector, wherein the controller activates the cooler when the output of the second detector is larger than a second value and the output of the first detector exceeds a first value, and the controller decreases a luminance level of the lightning device without activating the cooler when the output of the second detector is less than the second value and the output of the first detector exceeds a first value.

## Description

### CROSS REFERENCE TO THE RELATED APPLICATION

The priority application number 2009-022918 upon which this patent application is based is hereby incorporated by reference.

### BACKGROUND OF THE INVENTION

### 1. Field of the Invention

The present invention relates to a liquid crystal display apparatus, especially, a liquid crystal display apparatus for outdoor installation.

### 2. Description of Related Art

In recent years, displays which can be installed outdoors are proposed. Especially the liquid crystal displays are promising for the outdoor installations because they are easy to slim down and high revolutionize.

The liquid crystal has a character between a solid and a liquid state. In the liquid crystal displays, images are displayed by controlling the orientation of a liquid crystal by varying a voltage applied to the liquid crystal. However, when the temperature of the liquid crystal rises, the images can not be displayed correctly since the liquid crystal liquefies and lose its orientation.

To enable an outdoor installation of the liquid crystal display, it is necessary to have a composition adapted for outdoor installation, for example, a waterproofing structure or a dustproof structure. However, when these structures are applied, since the air can not circulate inside and outside of the display apparatus, it is difficult to emit a heat generated inside the apparatus, and it may cause a temperature rise inside its housing. Thereby, the temperature of the liquid crystal of the panel may rise.

Moreover, in a transmissive liquid crystal display, in order to improve visibility in outdoor, where under a strong light such as direct rays of the sun, it is necessary to make a display portion (screen) brighter than the usual. To make the display portion brighter, it is necessary to raise an output from the illuminating device (backlight etc.), accordingly the heat quantity from the illuminating device get larger. Thereby, the temperature of the liquid crystal may rise easily.

Further, when the liquid crystal display is installed outdoors, the display may be exposed to direct rays. When a strong outdoor daylight is irradiated on its display surface, the temperature of the liquid crystal of the display rises.

Therefore, troubles on displaying images may occur frequently when a liquid crystal displays is installed outdoors, because of the temperature rise of the liquid crystal in the display.

### SUMMARY OF THE INVENTION

A first liquid crystal display apparatus of the present invention comprises:
a liquid crystal panel;
a lightening device lightening the liquid crystal panel;
a cooler cooling the liquid crystal panel;
a first detector detecting a surrounding temperature of the liquid crystal panel;
a second detector detecting a surrounding temperature of the cooler;
a controller controlling the lightening device and the cooler based on output of the first and the second detector, wherein
the controller activates the cooler when the output of the second detector is larger than a second value and the output of the first detector exceeds a first value, and
the controller decreases a luminance level of the lightning device without activating the cooler when the output of the second detector is less than the second value and the output of the first detector exceeds a first value.

A second liquid crystal display apparatus of the present invention comprises:
a liquid crystal panel;
a lightening device lightening the liquid crystal panel;
a detector arranged near the liquid crystal panel, detecting the outdoor light, and
a controller which decreases the luminance level of the illuminating device, when it is determined that the outdoor light is irradiated for predetermined time based on the output from the detector.

### BRIEF DESCRIPTION OF THE DRAWINGS

Fig.1 is an outlined longitudinal sectional view of the liquid crystal display apparatus of the first embodiment.
Fig.2 is an outlined block diagram of the liquid crystal display apparatus of the first embodiment.
Fig.3 is a flow chart showing an operation of the liquid crystal display apparatus of the first embodiment.
Fig.4 is an outlined longitudinal sectional view of the liquid crystal display apparatus of the second embodiment.
Fig.5 is an outlined block diagram of the liquid crystal display apparatus of the second embodiment.
Fig.6 is a flow chart showing an operation of the liquid crystal display apparatus of the second embodiment.

### DETAILED DESCRIPTION OF THE INVENTION

The present invention embodied in a display apparatus will be specifically described below with the reference to the drawings.

### (First embodiment)

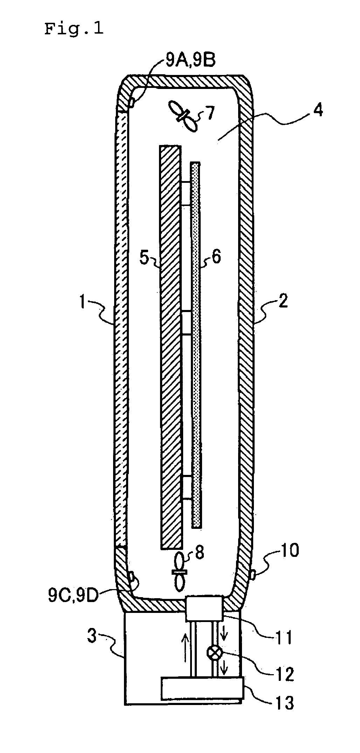

Fig.1 is an outlined longitudinal sectional view of the liquid crystal display apparatus of the first embodiment.

The liquid crystal display apparatus has a front glass 1 arranged at the front side of the display, a housing 2, and a cooler 3.

In an interior space 4 surrounded by the front glass 1, the housing 2, and the cooler 3, a liquid crystal panel 5, a back light 6, ventilation fans 7 and 8 for circulating the air in the space 4, and the first temperature sensors 9A-9D detecting a surrounding temperature of the panel 5 are arranged. The panel 5 is arranged so that its display screen is located in the front side of the display, and thus a user can see the screen through the front glass 1. The back light 6 is arranged behind the panel 5, and irradiates the panel 5. The fan 7 is arranged at the upper part of the space 4, and the fan 8 is arranged at the lower part of the space 4. Each of the sensors 9A-9D is arranged near the corner of the front inner side of the housing 2.

Further, a second temperature sensor 10 for detecting the temperature of the setting position of a liquid crystal display is arranged in the back side of and outside of the housing 2.

The cooler 3 has a vaporizer 11, a compressor 12, a radiator 13, and a coolant course. The coolant vaporized by the vaporizer 11 is sent to the compressor 12 through the coolant course, then compressed by the compressor 12, and becomes a hot gas. The coolant which is turned to a hot gas by the compressor 12 is sent to the radiator 13 through the coolant course, and is liquefied by a heat dissipation of the radiator 13 under a high pressure. During the heat dissipation, the radiator 13 emits heat outside the liquid crystal display apparatus. The high pressure liquid liquefied at the radiator 13 is sent to the vaporizer 11 through a coolant course, and then evaporated by lowering its pressure in the vaporizer 11. During the evaporation, the vaporizer 11 absorbs a heat of the interior space 4 as an evaporation heat.

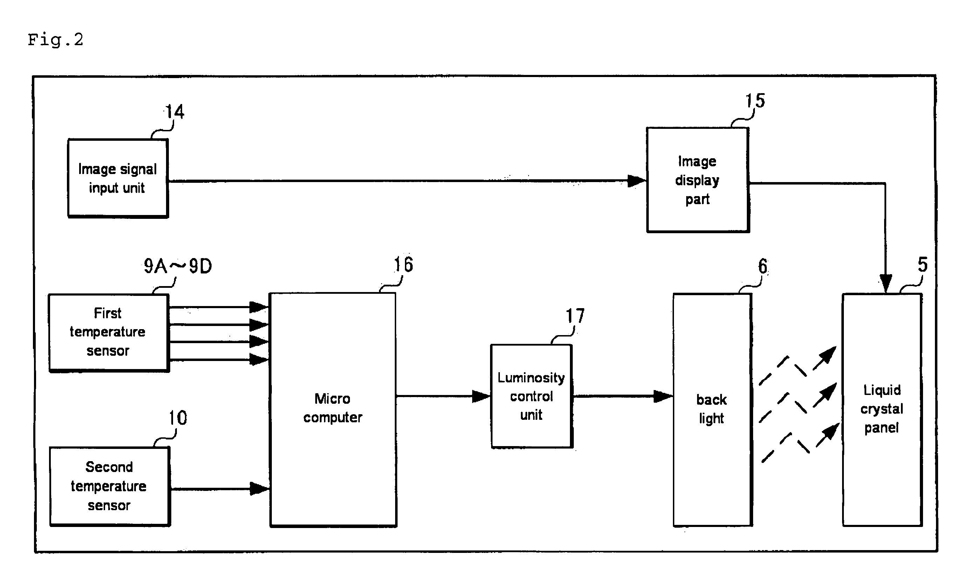

Next, an outlined block diagram of the above liquid crystal display apparatus is shown in Fig.2. In Fig.2, same marks are given to the portions already described in Fig.1, and for such portions, detailed explanations are omitted hereafter.

The liquid crystal display apparatus has an image signal input unit 14, an image display part 15, first temperature sensors 9A-9D, a second temperature sensor 10, a microcomputer 16, a luminosity control part 17, a backlight 6, and a liquid crystal panel 5.

The image signal input unit 14 is connected to LAN (Local Area Network) for example, and when an image signal is input from LAN to the unit 14, it outputs an image signal of a DVI (Digital Visual Interface) format. The image display part 15 converts a signal from the unit 14 into a suitable format for the liquid crystal display panel 5 and outputs the signal to the panel 5. Then, an image is displayed in the panel 5.

The backlight 6 irradiates a light from the back side of the liquid crystal display panel 5 in order to display an image by the panel 5. The backlight 6 is consisted by CCFL (Cold Cathode Fluorescent Lamp) for example. The microcomputer 16 outputs a backlight control signal which indicates a luminosity of the backlight 6 to the luminosity control part 17. The control part 17 outputs the PWM (Pulse Width Modulation) drive signal to the backlight 6 according to the backlight control signal from the microcomputer 16. The backlight 6 emits a light according to the PWM drive signal from the control part 17.

The first temperature sensors 9A-9D and the second temperature sensor 10 are connected to the microcomputer 16, and the microcomputer 16 converts analog temperature detection signals from the sensors 9A-9D and the sensor 10 to digital signals. Further, the microcomputer 16 executes on/off controls of the ventilation fans 7 and 8, and the cooler 3.

Generally, guaranteed operating temperature is defined in coolers, and the operation of the cooler is not guaranteed when a surrounding temperature (an air temperature on the emitting side of the cooler) is less than the lower limit of, or higher than the upper limit of the guaranteed temperature.

For example, in the cooler 3, the lower limit of the guaranteed temperature is defined considering that the lubricating oil used inside the cooler does not serve as a lubricator in low temperatures (for example, under 10 degrees Celsius) because the viscosity of the oil become too high.

Therefore, it is desirable to stop operating the cooler 3 when the surrounding temperature of the display apparatus (surrounding temperature of the cooler 3) detected by the second temperature sensor 10 is under the guaranteed operating temperature

When a surrounding temperature of the liquid crystal display is under the guaranteed temperature, the temperature of the interior space 4 does not rise such that the liquid crystal of the liquid crystal panel 5 liquefies even if the cooler 3 is not operated, because the temperature of the space 4 does not raise so much in such cases.

However, the liquid crystal display apparatus installed outdoors may be exposed to a direct sunlight and when the sunlight irradiates the display surface of the liquid crystal panel 5, the temperature of the liquid crystal of the panel 5 rises. Especially, if the display apparatus has a waterproofing structure or a dust proofing structure, since the air-tightness of the interior space 4 is high, the temperature of the interior space 4 may become high is high even if the surrounding temperature of the apparatus is low because of a greenhouse effect. As a result, the temperature of the liquid crystal may rise to a liquefying temperature (approximately 70 degrees Celsius).

Especially at a high latitude area or in a winter season, the display surface of the liquid crystal panel 5 may receive direct sunlight entering perpendicularly for a long time when the display apparatus is installed facing its display screen southward because an outside temperature is low and the solar altitude is low. In this case, there is a possibility that the temperature of the liquid crystal of the panel 5 rise to a liquefaction temperature, even if the surrounding temperature of the apparatus is low.

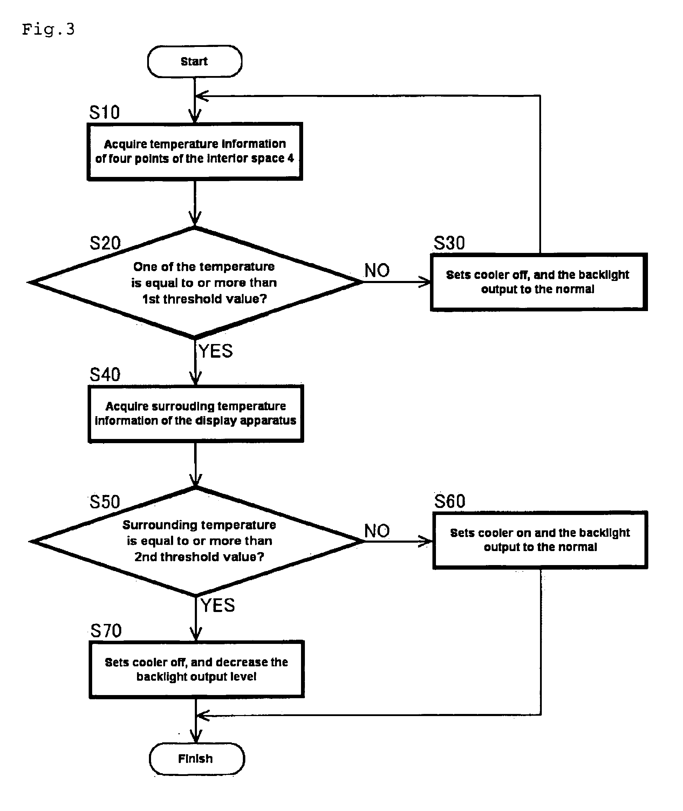

Therefore, the liquid crystal display apparatus of this embodiment executes a procedure shown in a flow chart of Fig.3.

First, the microcomputer 16 acquires a temperature information of four points inside the interior space 4 based on temperature detection signals from each of the first temperature sensors 9A-9D (step S10), and then determines whether at least one of four acquired temperature is equal to or more than a first threshold value (step S20).

If all the temperature acquired is less than the first threshold value ("no" in step S20), the microcomputer 16 sets the cooler off. In detail, under an assumption that the liquid crystal of the panel 5 does not liquefy even if the output of the backlight 6 is set to a normal setting, the microcomputer 16 keeps the cooler 3 off when the cooler 3 is currently off. When the cooler is currently on, the microcomputer 16 turns the cooler 3 to longer its operating life and to conserve energy. Further, when the output of the backlight 6 is currently in the normal setting, the microcomputer 16 maintains the normal setting. When the output is not in the normal setting, the microcomputer 16 turns it to the normal setting so that the visibility of the image screen improves (step S30). Then, it returns to step S10.

If one of the temperature of the interior space 4 is equal to or more than the first threshold value ("yes" in step S20), presuming that the outdoor daylight is irradiated on a display surface of the panel 5 for a predetermined period, the microcomputer 16 acquires a surrounding temperature of the display apparatus based on the detecting signal from the second temperature sensor 10 (step S40), and determines whether the acquired temperature is less than a second threshold value or not (step S50).

Here, the second threshold value is set to a minimum guaranteed operating temperature of the cooler 3 or a predetermined temperature which is somewhat higher than the guaranteed temperature.

If the surrounding temperature of the display apparatus is not less than the second threshold value ("no" in step S50), the microcomputer sets the cooler 3 on. In detail, if the cooler 3 is currently on, the microcomputer keeps the cooler 3 on. If the cooler is currently off, the microcomputer turns the cooler in order not to liquefy the liquid crystal. Further, if the output of the backlight 6 is set to a normal setting, the microcomputer 16 keeps the setting normal. If the output level of the backlight 6 is set lower than the normal setting, the microcomputer turn the setting to the normal in order to assure a visibility under a strong sunlight (step S60). Then the procedure shown in the flow chart ends.

If the surrounding temperature of the display apparatus is less than the second threshold value ("yes" in step S50), the microcomputer sets the cooler 3 off. In detail, if the cooler 3 is currently off, the microcomputer 16 keeps the cooler 3 off, and if the cooler 3 is currently on, the microcomputer 16 turns the cooler 3 off. Further, if the output level of the backlight 6 is currently in the normal setting, the microcomputer 16 sets the output level lower than the normal setting because the liquid crystal of the panel 5 might liquefy if the cooler 3 is kept off while the output level of the backlight 6 is kept normal setting. If the level of the backlight 6 is currently in a level lower than the normal setting, the microcomputer 16 maintains the setting of backlight 6 (step S70). Then the procedure shown in the flow chart ends.

If a procedure shown in flow chart of Fig.3 finishes, the procedure is executed from the beginning again. However, if the cooler 3 is turned from on to off or vise versa in the procedure, it is desirable to execute the procedure again after a predetermined period has elapsed in order to protect the cooler 3.

According to the above procedure, except a case when one of the temperature among four points of the interior space 4 is equal to or more than the first threshold value and the surrounding temperature of the display apparatus is less than the second threshold value, a visibility under a strong daylight is secured. Further, it can inhibit the liquefaction of the liquid crystal of the panel 5.

In step S10, the temperature information of four points of the interior space 4 may be acquired in a form of either momentary temperature or the average temperature in a predetermined period. If the average temperature is adapted, it can reduce effects from momentary noise or environmental change etc. In order to acquire the average temperature, the microcomputer 16 may keep on sampling the temperature detection signal from the first temperature sensors 9A-9D every second, then compute the average value acquired in the last 100 seconds.

Similarly in step S40, the surrounding temperature information of the display apparatus may be acquired in a form of either momentary temperature or the average temperature in a predetermined period. If the average temperature is adapted, it can reduce effects from momentary noise or environmental change as well. In order to acquire the average temperature, the microcomputer 16 may keep on sampling the temperature detection signal from the second temperature sensor 10 every second, then compute the average value acquired in the last 100 seconds.

### (Second embodiment)

It can be considered that one of the factors the temperature of the liquid crystal of the liquid crystal panel 5 rises is a heat emitted from the display apparatus itself (especially a heat from the backlight 6) or a heat caused by the irradiation of strong outdoor light (such as direct sunlight) to the display surface of the panel 5. As mentioned above, if the surrounding temperature of the display apparatus is under the guaranteed operating temperature of the cooler 3, usually, the temperature of the interior space 4 does not increase and the temperature does not tend to increase to a level which the liquid crystal of the panel 5 liquefies.

However, even if the surrounding temperature of the display apparatus is low, the liquid crystal liquefies if the outdoor light irradiates the panel for a long time period.

Therefore, according to a liquid crystal display apparatus of the present embodiment, it is judged that the liquid crystal of the liquid crystal panel 5 might liquefy if the outdoor light irradiates the display surface of the panel for a predetermined period unless the backlight level is not lowered from the normal setting.

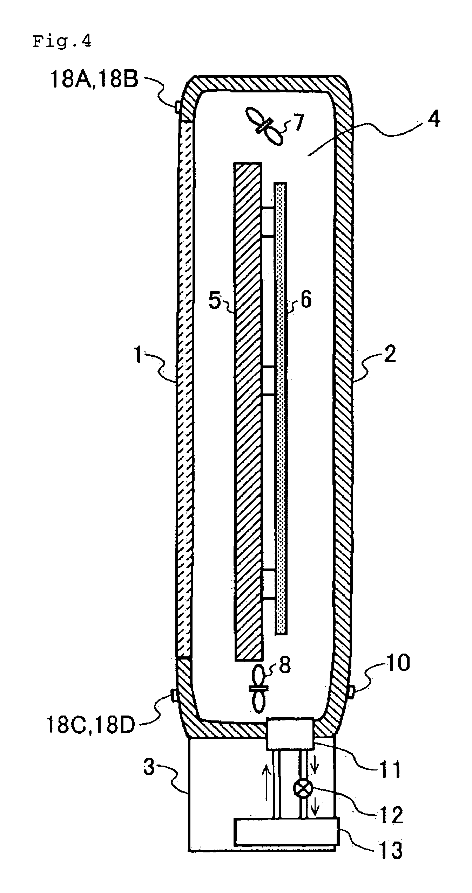

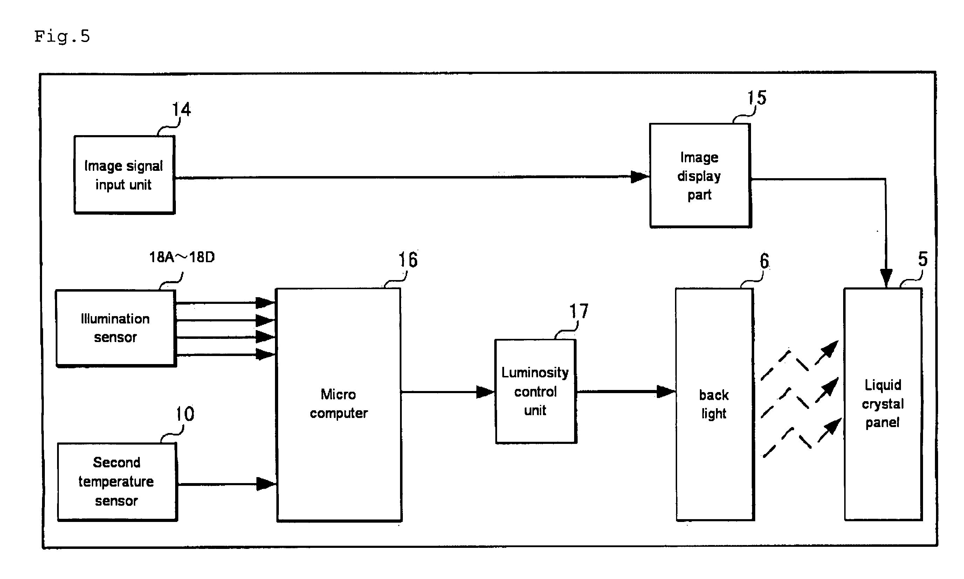

Fig.4 is a longitudinal sectional view of the liquid crystal display of this embodiment. Fig.5 is a block diagram of the liquid crystal display of this embodiment. In Fig.4, same marks are given to the portions already described in Fig.1. Similarly, in Fig.5, same marks are given to the portions already described in Fig.2 or Fig.4. For such portions, detailed explanations are omitted hereafter.

According to the liquid crystal display apparatus of the present embodiment the illumination sensors 18A-18D are newly arranged in the four corners of the front side perimeter side of the housing 2 instead of the first temperature sensors 9A-9D in the first embodiment.

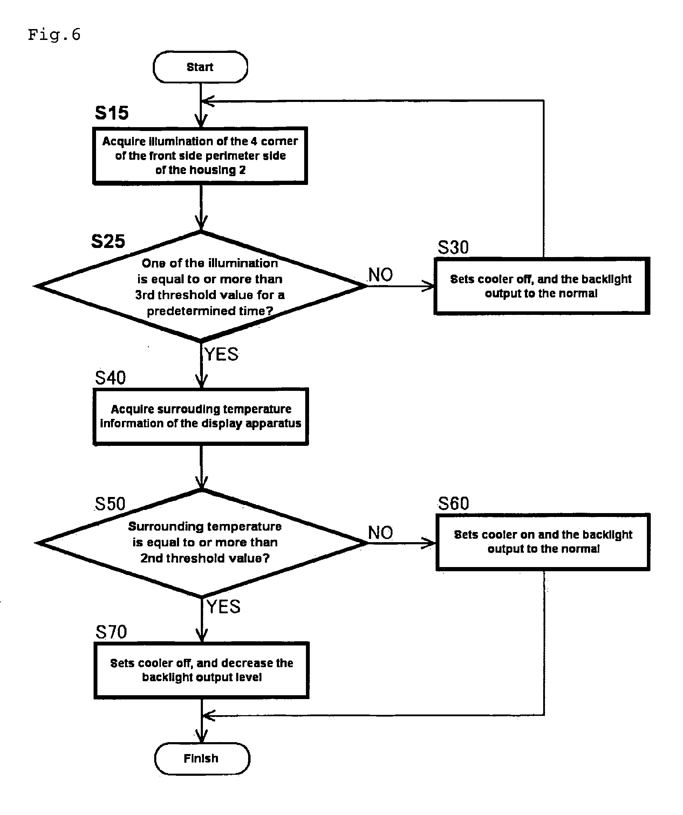

Fig.6 is a flow chart showing a procedure which the display apparatus of the present embodiment executes. In Fig.6, same marks are given to the steps already described in Fig.3, and for such steps, detailed explanations are omitted hereafter.

According to The flow chart of Fig.6, steps S10 and S20 are omitted from the flow chart of Fig.3 and steps S15 and S25 are added instead.

In Step S15, the microcomputer 16 acquires the illumination information on the four corners of housing 2, based on the illumination detection signal from the sensors 18A-18D. In Step S25, the microcomputer 16 determines whether one of the illumination detected at each corners is more than a third threshold value for a predetermined period or not.

When it is determined "no" in step S25, assuming that the liquid crystal of the panel 5 does not liquefy even if the output level of the backlight is kept in normal setting, the microcomputer 16 turns the cooler 3 off, and then goes to step S30. When it is determined "yes" in step S25, assuming that the outdoor light is irradiating the display surface of the panel 5 for more than a predetermined time, it goes to step S40.

According to the above procedures, the visibility of the display screen under a strong daylight can be secured, or liquefaction of the liquid crystal can be suppressed.

As well as the first embodiment, the illumination information of four corners acquired in step S15 may be either momentary illumination or average illumination during a predetermined period.

The present invention is not limited to the foregoing embodiment but can be modified variously by one skilled in the art without departing from the spirit of the invention as set forth in the appended claims.

## Claims

1. A liquid crystal display apparatus comprising:
a liquid crystal panel;
a lightening device lightening the liquid crystal panel;
a cooler cooling the liquid crystal panel;
a first detector detecting a surrounding temperature of the liquid crystal panel;
a second detector detecting a surrounding temperature of the cooler;
a controller controlling the lightening device and the cooler based on output of the first and the second detector, wherein
the controller activates the cooler when the output of the second detector is larger than a second value and the output of the first detector exceeds a first value, and
the controller decreases a luminance level of the lightning device without activating the cooler when the output of the second detector is less than the second value and the output of the first detector exceeds a first value.

2. The apparatus of claim 1, wherein the cooler has a compressor.

3. A liquid crystal display apparatus comprising:
a liquid crystal panel;
a lightening device lightening the liquid crystal panel;
a detector arranged near the liquid crystal panel, detecting the outdoor light, and
a controller which decreases the luminance level of the illuminating device, when it is determined that the outdoor light is irradiated for predetermined time based on the output from the detector.
